# EUROPÄISCHE PATENTSCHRIFT

(11) **EP 2 246 180 B1**
(45) Veröffentlichungstag und Bekanntmachung des Hinweises auf die Patenterteilung: **20.05.2015**
(21) Anmeldenummer: 10003114.5
(22) Anmeldetag: 24.03.2010
(51) Int. Cl.: B29C 70/20, B29C 70/24, B32B 5/26, B32B 7/08, B29B 17/02, B29B 17/04, B29L 31/30, B29K 105/26, B29K 105/08

(54) **Verwendung von recyceltem Fasermaterial zur Herstellung einer Verstärkungsstruktur aus faserartigem Material für Kunststoffbauteile**
Use of recycled fibre material for manufacturing of a reinforcement structure made of fibrous material for plastic components
Utilisation de matériau fibreux recyclé pour une structure de renforcement en matériau fibreux pour composants en plastique

(30) Priorität: 28.04.2009 DE 102009019175
(43) Veröffentlichungstag der Anmeldung: 03.11.2010
(73) Patentinhaber: Bayerische Motoren Werke Aktiengesellschaft, 80809 München (DE)
(72) Erfinder: Boes, Jörn, 84030 Ergolding (DE); Schillinger, Michael, 84032 Altdorf (DE); Pfitzer, Hanno, 84095 Furth (DE)

(56) Entgegenhaltungen:
- DE-A1- 3 137 844
- DE-A1- 19 739 486
- DE-A1-102005 000 115
- US-A1- 2003 077 965
- US-B1- 6 565 022
- US-B2- 6 599 610
- "MULTI-AXIALE KETTENGEWIRKE ALS TEXTILE VERSTARKUNG IN FASERVERBUNDWERKSTOFFEN", MELLIAND TEXTILBERICHTE, DEUTSCHER FACHVERLAG, FRANKFURT AM MAIN, DE, Bd. 70, Nr. 2, 1. Februar 1989 (1989-02-01), Seiten 109-112, XP000026288, ISSN: 0341-0781
- MIRACLE D B ET AL: "Composites, Recycling and Disposal of Polymer-Matrix Composites", 1. Dezember 2001 (2001-12-01), ASM HANDBOOK, COMPOSITES, ASM INTERNATIONAL, USA, PAGE(S) 1006 - 1012, XP002612183, ISBN: 978-0-87170-703-1 * Seite 1 * * Seite 3, rechte Spalte - Seite 7, linke Spalte *
- HORSCH F: "DREIDIMENSIONALE VERSTARKUNGSMATERIALIEN FUER FASERVERBUNDWERKSTOFFE*", KUNSTOFFE INTERNATIONAL, CARL HANSER VERLAG, MUNCHEN, DE, Bd. 80, Nr. 9, 1. September 1990 (1990-09-01), Seiten 1003-1007, XP000226455, ISSN: 0023-5563

## Beschreibung

Die vorliegende Erfindung betrifft eine Verwendung gemäß dem Oberbegriff des Patentanspruches 1.

Bei der Herstellung von Faserverbundbauteilen in der Luft- und Raumfahrtindustrie, im Automobilbau, für Windkraftanlagen, im Bootsbau, im Schienenfahrzeugbau etc. werden häufig so genannte "mehrschichtige Faserkomplexe" verwendet. Der Begriff "Faserkomplex" umfasst verschiedenste aus Fasern, z.B. Kohle- oder Glasfasern oder sonstigen Kunstfasern hergestellte Strukturen. Faserkomplexe oder Teile davon können in Form von Geweben, Gelegen, Gewirken, Gestricken, Vlieshalbzeugen oder in Form anderer Strukturen vorliegen. Typische Verstärkungsfasern derartiger Gewebe, Gelege, Vliese, Matten etc. sind Kohlenstoff-, Glas- oder Aramidfasern. Für Gewirkstrukturen werden häufig auch Polyester oder Polyamid-Filamente verwendet.

Die einzelnen Schichten bzw. Lagen eines Faserkomplexes sind häufig durch Nahtstrukturen oder durch Klebeverbindungen miteinander verbunden, wodurch sich ein vergleichsweise robuster Mehrschichtkomplex ergibt, der eine einfache und hochproduktive Verarbeitung in Harzinjektions- oder Infusionsverfahren ermöglicht.

Die Herstellung derartiger Faserkomplexe ist teuer. Bei dem für eine Verarbeitung zu Kunststoffteilen erforderlichen Zuschnitt ergeben sich bisweilen vergleichsweise große Verschnittanteile.

Aus dem Aufsatz "Multi-axiale Kettengewirke als textile Verstärkung in Faserverbundwerkstoffen", erschienen in Melliand Textilberichte, Deutscher Fachverlag, Frankfurt am Main, ist der Aufbau von Faserverbundwerkstoffen, bestehend im wesentlichen auch hochfestem Fasermaterial als lastaufnehmende Grundstruktur, das in einer bindefähigen Matrixsubstanz zur Lagefixierung eingebettet ist auch für den Luft- und Raumfahrt- sowie Fahrzeugbau bekannt.

Die US 6,599,610 B2 zeigt einen mehrschichtigen Aufbau, wobei jede Schicht eine Vielzahl von strangartigen Kohlefasern aufweist. Die Ausrichtung der Fasern einer Schicht unterscheidet sich von der Ausrichtung der Fasern einer anderen Schicht, wobei die Schichten miteinander vernäht sind.

Die DE 31 37 844 A1 betrifft ein Verfahren zur Herstellung von Kurzfasern für Verbundwerkstoffe, bei dem aus Garn- und/oder Gewebeabfällen, die bei der Verarbeitung von kunstfaserverstärkten, insbesondere Kohlefaserverstärkten Kunststoffen anfallen, verwendet werden.

DE 10 2005 000 115 A1 zeigt ein Verfahren zur Herstellung einer multidirektionalen Gelegebahn, die über eine in Längsrichtung verlaufende Materiallage verfügt und damit hinreichende Stabilität gegen Verzüge in der Gelegefläche aufweist.

Aus der US 2003/0077965 A1 ist ein dreidimensionales Abstandsgewirke zur Verwendung bei der Herstellung von faserverstärkten Polymerverbundstoffen offenbart.

Aufgabe der Erfindung ist es, eine Verstärkungsstruktur aus faserartigem Material zu schaffen, die kostengünstig und ökologisch vorteilhaft ist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Das Grundprinzip der Erfindung besteht in einer Verstärkungsstruktur aus faserartigem Material, die mindestens eine Vliesauflage aufweist, welche aus recycletem Fasermaterial besteht. Der Begriff "recycletes Fasermaterial ist äußert breit zu verstehen. Bei dem recycleten Fasermaterial kann es sich um kurzfaserige Fasern handeln, die aus längerfasrigen Fasern hergestellt wurden. Ausgangsmaterial für den Recyclingprozess können beispielsweise Verschnittabfälle von Verstärkungsstrukturen sein, z.B. von Geweben, Gewirken, Gelegen, Gestricken oder ähnlichem, die aus vergleichsweise langfasrigen Fasern bestehen.

Beispielsweise kann vorgesehen sein, dass mechanisch hochbelastete Komponenten eines Fahrzeugs aus Verstärkungsstrukturen "erster Generation" bestehen, d.h. aus Verstärkungsstrukturen, welche wiederum aus langfasrigen Kohle-, Glas- oder Aramidfasern bestehen. Die beim Zuschneiden der Verstärkungsstrukturen erster Generation entstehenden Verschnittabfälle können dann aufbereitet und zu einem kürzerfasrigen Vlies aufgearbeitet werden, das als Vlieslage einer Verstärkungsstruktur "zweiter Generation" verwendet werden kann. Das Aufbereiten und Aufarbeiten längerfasriger Verstärkungsstrukturen kann folgende Schritte umfassen:
1. Faservorbereitung mit den Schritten
   - Stanzen bzw. Schneiden der als Ausgangsmaterial verwendeten längerfasrigen Struktur.
   - "Öffnen" der als Ausgangsprodukt verwendeten Abfälle in Hammermühlen (ohne Faserbeschädigung).
2. Vliesherstellung
   - Mechanische Vliesbildung durch Krempeln.
   - Erzeugen einer Faserorientierung im Krempelprozess durch Auskämmen.
   - Fixieren bzw. Stabilisieren durch Vernadeln.
3. Vlies-/Gelegekomplexherstellung
   - Verarbeitung des Vlieses bei der Gelegeherstellung zu einem Mehrschichtkomplex.
   - Kombination eines Fasergeleges mit einem gerichteten Vlies.

Nach einer Weiterbildung der Erfindung weist die Verstärkungsstruktur bzw. der Mehrschichtkomplex außer der aus recycletem Fasermaterial bestehenden Vlieslage mindestens eine Lage unidirektional ausgerichteter Verstärkungsfasern auf. Die Orientierung der Verstärkungsfasern kann entsprechend einer Hauptbelastungsrichtung des daraus herzustellenden Kunststoffbauteils gewählt werden. Die Vlieslage und die mindestens eine Lage unidirektional ausgerichtete Verstärkungsfasern kann mit einer aus mindestens einem Faden bestehenden "Sekundärstruktur" durchsetzt sein. Die Sekundärstruktur hat primär die Aufgabe, die Vlieslage und die aus unidirektional ausgerichteten Fasern bestehende Lage relativ zueinander zu fixieren. Die beiden Lagen können mittels des mindestens einen Fadens vernäht sein. Denkbar ist auch eine die beiden Lagen durchsetzende Gewebestruktur, ein Gewirk, ein Gestrick o.ä.

Nach einer Weiterbildung der Erfindung handelt es sich bei der Verstärkungsstruktur um einen Mehrschichtkomplex, d.h. um eine Verstärkungsstruktur, die außer der aus recycletem Fasermaterial bestehenden Vlieslage mehrere weitere Lagen aufweist, z.B. in der Form von Gelegen, Gestricken, Geweben, Gewirken, Vlieslagen o.ä.

Denkbar ist auch, dass die Verstärkungsstruktur einer erste aus recycletem Vliesmaterial bestehende Vlieslage aufweist, deren Fasern z.B. in einer bestimmten Richtung (z.B. ±45°, ±90°) orientiert sind und dass diese Vlieslage auf eine andere Vlieslage, die ebenfalls aus recycletem Vliesmatierial hergestellt sein kann und deren Fasern in einer anderen Richtung von z.B. 0° orientiert sind, aufgenäht ist.

Zwischen einzelnen oder mehreren Lagen eines derartigen Mehrschichtkomplexes kann mindestens eine als Abstandshalterlage fungierende Lage vorgesehen sein. Die Abstandshalterlage hat zum einen die Aufgabe, dass einzelne Lagen nicht unmittelbar aneinander anliegen und zum anderen, dass beim Spritzen bzw. Injizieren von Kunststoff, d.h. bei der eigentlichen Herstellung des Kunststoffbauteils, das flüssige Kunststoffmaterial besser in den Mehrschichtkomplex eindringen und den Mehrschichtkomplex optimal durchtränken kann, ohne dass die einzelnen Lagen relativ zueinander verrutschen.

Bei der als Abstandshalterlage fungierenden Lage kann es sich z.B. um ein Gewirk handeln. Besonders geeignet zur Herstellung eines derartigen Abstandsgewirks sind Polyesterfäden. Es kann sich also um ein aus Polyesterfäden bestehendes Abstandsgewirk handeln.

Ausgangsmaterial für die aus recycletem Fasermaterial bestehende Vlieslage müssen nicht notwendigerweise Verschnittreste längerfasriger Verstärkungsstrukturen sein. Als Ausgangsmaterial können auch faserverstärkte Kunststoffbauteile bzw. Ausschussteile oder Fertigungsabfälle, die z.B. beim Beschneiden, Bohren etc. entstehen, verwendet werden. In diesem Fall müssen die in den faserverstärkten Kunststoffbauteilen enthaltenen Faseranteile zunächst aus den Bauteilresten "herausgelöst" werden. Ein hierfür geeignetes Verfahren ist beispielsweise die Pyrolyse. Durch Pyrolyse wird der Harzanteil eines faserverstärkten Kunststoffbauteils "weggebrannt", so dass der Faseranteil zurückbleibt. Alternativ dazu kann der Faseranteil auch sovolytisch gewonnen werden, d.h. indem der Harzanteil chemisch gelöst wird.

## Patentansprüche

1. Verwendung von recyceltem Fasermaterial zur Herstellung einer Verstärkungsstruktur aus faserartigem Material für Kunststoffbauteile, insbesondere für Karosserieteile von Fahrzeugen, wobei die Verstärkungsstruktur mindestens eine Lage unidirektional ausgerichteter Verstärkungsfasern und mindestens eine Vlieslage aufweist, wobei die Vlieslage und die mindestens eine Lage unidirektional ausgerichteter Verstärkungsfasern mittels einer aus mindestens einem Faden bestehenden Sekundärstruktur miteinander verbunden bzw. von einer aus mindestens einem Faden bestehenden Sekundärstruktur durchsetzt sind, **dadurch gekennzeichnet, dass** die Vlieslage aus dem recycletem Fasermaterial ausgebildet ist, und dass zwischen zwei Lagen der Verstärkungsstruktur mindestens eine als Abstandshalterlage fungierende Lage vorgesehen ist, wobei die Herstellung des Vlies mittels mechanischer Vliesbildung durch Krempeln erfolgt, durch Auskämmen im Krempelprozess eine Faserorientierung zur Herstellung eines gerichteten Vlies erzeugt und durch Vernadeln stabilisiert wird,
und das das Vlies bei der Gelegeherstellung zu einem Mehrschichtkomplex verarbeitet wird in dem ein Fasergelege mit dem gerichteten Vlies kombiniert wird.

2. Verwendung nach Anspruch 1,
**dadurch gekennzeichnet, dass** die als Abstandshalterlage fungierende Lage durch ein Gewirk gebildet ist, insbesondere durch ein Gewirk aus Polyesterfäden.

3. Verwendung nach einem der vorangehenden Ansprüche,
**dadurch gekennzeichnet, dass** es sich bei den Fasern der Vlieslage um Kohlefasern, Glasfasern oder synthetische Fasern, insbesondere um Aramidfasern handelt.

4. Verwendung nach einem der vorangehenden Ansprüche,
**dadurch gekennzeichnet, dass** der mindestens eine Faden mit der Vlieslage und mindestens einer weiteren Lage der Verstärkungsstruktur vernäht ist.

5. Verwendung nach einem der vorangehenden Ansprüche,
**dadurch gekennzeichnet, dass** die Vlieslage und mindestens eine weitere Lage der Verstärkungsstruktur durch ein Gewirk miteinander verbunden sind.

6. Verwendung nach einem der vorangehenden Ansprüche 1 bis 5,
**dadurch gekennzeichnet, dass** der mindestens eine Faden, welcher die Vlieslage und mindestens eine weitere Lage der Verstärkungsstruktur miteinander verbindet, aus Polyestermaterial besteht.

## Claims

1. Use of recycled fibre material for producing a reinforcement structure of fibrous material for plastics material components, especially for body parts of vehicles, wherein the reinforcement structure has at least one layer of unidirectionally oriented reinforcement fibres and at least one nonwoven layer, wherein the nonwoven layer and the at least one layer of unidirectionally oriented reinforcement fibres are connected to one another by means of a secondary structure comprising at least one thread or have a secondary structure comprising at least one thread passing through them, **characterised in that**
the nonwoven layer is formed from the recycled fibre material and **in that** at least one layer acting as a spacer layer is provided between two layers of the reinforcement structure, wherein the nonwoven is produced by means of mechanical nonwoven formation by carding, a fibre orientation to produce a directed nonwoven is produced by combing out in the carding process and is stabilised by needling and **in that** the nonwoven is processed during the interlaid scrim production to form a multi-layer complex **in that** a fibre interlaid scrim is combined with the directed nonwoven.

2. Use according to claim 1,
**characterised in that** the layer acting as a spacer layer is formed by a knitted fabric, especially by a knitted fabric of polyester threads.

3. Use according to any one of the preceding claims,
**characterised in that** the fibres of the nonwoven layer are carbon fibres, glass fibres or synthetic fibres, in particular aramid fibres.

4. Use according to any one of the preceding claims,
**characterised in that** the at least one thread is sewn to the nonwoven layer and at least one further layer of the reinforcement structure.

5. Use according to any one of the preceding claims,
**characterised in that** the nonwoven layer and at least one further layer of the reinforcement structure are connected to one another by a knitted fabric.

6. Use according to any one of the preceding claims 1 to 5,
**characterised in that** the at least one thread, which connects the nonwoven layer and at least one further layer of the reinforcement structure to one another, consists of polyester material.

## Revendications

1. Utilisation d'un matériau à base de fibres recyclées pour l'obtention d'une structure de rigidification en un matériau de type fibres pour des éléments en matériau synthétique, en particulier pour des pièces de carrosserie de véhicules, selon laquelle la structure de rigidification comporte au moins une couche de fibres de rigidification à orientation unidirectionnelle et au moins une couche de voile, la couche de voile et la couche de fibres de rigidification à orientation unidirectionnelle étant reliées au moyen d'une structure secondaire constituée d'au moins un brin, ou étant traversée par une structure secondaire constituée par au moins un brin,
**caractérisée en ce que**
la couche de voile est réalisée dans le matériau à base de fibres recyclées, et, entre deux couches de la structure de rigidification il est prévu au moins une couche constituant une couche de maintien d'écartement,
la fabrication du voile étant effectuée mécaniquement, par cardage, l'orientation des fibres pour obtenir un voile orienté étant effectuée par peignage pendant le procédé de cardage et étant stabilisée par aiguilletage, et, lors de l'obtention du canevas, le voile est traité de façon à obtenir un complexe multicouches dans lequel le canevas de fibres est combiné au voile orienté.

2. Utilisation conforme à la revendication 1,
**caractérisée en ce que**
la couche constituant une couche de maintien d'écartement est formée par un tissu à mailles, en particulier par un tissu à mailles en fibres de polyester.

3. Utilisation conforme à l'une des revendications précédentes,
**caractérisée en ce que**
les fibres de la couche de voile sont des fibres de carbone, des fibres de verre ou des fibres synthétiques, en particulier des fibres d'aramide.

4. Utilisation conforme à l'une des revendications précédentes,
**caractérisée en ce que**
le brin est cousu avec la couche de voile et au moins une autre couche de la structure de rigidification.

5. Utilisation conforme à l'une des revendications précédentes,
**caractérisée en ce que**
la couche de voile et au moins une autre couche de la structure de rigidification sont reliées entre elles par un tissu à mailles.

6. Utilisation conforme à l'une des revendications précédentes 1 à 5,
**caractérisée en ce que**
le brin qui relie la couche de voile et au moins une autre couche de la structure de rigidification sont constitués de matériau en polyester.
